# EUROPÄISCHE PATENTSCHRIFT

(11) **EP 3 600 681 B1**
(45) Veröffentlichungstag und Bekanntmachung des Hinweises auf die Patenterteilung: **24.03.2021**
(21) Anmeldenummer: 18708401.7
(22) Anmeldetag: 01.03.2018
(51) Int. Cl.: B29B 7/76, B05B 1/12, B05B 1/16

(54) **DÜSENEINHEIT FÜR EINE REAKTIONSGIESSMASCHINE SOWIE VERFAHREN ZUM HERSTELLEN EINES KUNSTSTOFFTEILES**
NOZZLE UNIT FOR A REACTION MOLDING MACHINE AND METHOD FOR PRODUCING A PLASTIC PART
UNITÉ FORMANT BUSE POUR UNE MACHINE DE MOULAGE PAR RÉACTION AINSI QUE PROCÉDÉ DE FABRICATION D'UNE PIÈCE EN MATIÈRE PLASTIQUE

(30) Priorität: 21.03.2017 DE 102017106038
(43) Veröffentlichungstag der Anmeldung: 05.02.2020
(73) Patentinhaber: KraussMaffei Technologies GmbH, 80997 München (DE)
(72) Erfinder: BERG, Alexander, 85221 Dachau (DE); NOWAK, Thomas, 81673 München (DE)
(74) Vertreter: Krauss, Philipp
(86) Internationale Anmeldenummer: PCT/EP2018/055027
(87) Internationale Veröffentlichungsnummer: WO 2018/172035

(56) Entgegenhaltungen:
- EP-A1- 0 669 196
- EP-A1- 1 270 086
- EP-A1- 2 050 797
- EP-A2- 0 437 727
- EP-A2- 1 020 272
- DE-A1- 2 536 883
- DE-A1- 3 435 769
- DE-A1-102011 002 880
- DE-A1-102012 006 048
- DE-B- 1 213 314
- US-A- 4 165 187

## Beschreibung

Die Erfindung betrifft eine Düseneinheit (auch als Düsenvorrichtung oder Düsenbaustein bezeichnet) für eine (mehrere reaktive Kunststoffkomponenten vermischende sowie ausbringende) Reaktionsgießmaschine, mit einem zum Anschluss an einen Mischkopfauslass vorbereiteten Eintrittskanal sowie einer, zum Auftragen eines Reaktivgemisches vorbereiteten, in einem ersten Betriebszustand mit dem Eintrittskanal verbundenen, ersten Austragsdüse. Des Weiteren betrifft die Erfindung eine die Düseneinheit aufweisende Mischkopfvorrichtung für eine Reaktionsgießmaschine, die Reaktionsgießmaschine mit der Mischkopfvorrichtung an sich sowie ein Verfahren zum Herstellen eines Kunststoffteiles, unter Verwendung der Reaktionsgießmaschine.

Gattungsgemäße Vorrichtungen sowie Verfahren sind aus dem Stand der Technik bereits bekannt. Die DE 10 2004 059 218 A1 offenbart eine Vorrichtung zur Herstellung von ein- oder mehrschichtigen Folien oder Compound-Formteilen, die wenigstens eine Schicht aus Reaktivkunststoff enthalten, umfassend Vorratsbehälter für die Reaktivkomponenten, Dosiereinrichtungen für die Reaktivkomponenten sowie einen Mischkopf und eine Sprühdüse.

Die US 4 164 187 A offenbart einen Mischkopf für reaktive Flüssigkeiten, welche kontinuierlich aus getrennten Tanks dem Mischkopf zugeführt werden. Das resultierende Gemisch fließt kontinuierlich durch einen Auslass mit einem Ventil, das den Fluss zu der einen oder anderen von mehreren Abgabedüsen leitet. Formen werden synchron und in einigen Fällen kontinuierlich unter den Düsen bewegt, durch die die Mischung abgegeben wird.

Die DE 1213314 B offenbart eine Mehrkomponentenspritzpistole für flüssiges Kunstharz, welche mit zwei Düsen versehen ist, die mit zwei getrennten Behältern und einer gemeinsamen Druckluftquelle verbindbar sind; die DE 2536883 A1 offenbart eine Düsenvorrichtung zum Spritzen eines Reaktionsgemisches zur Bildung von Schaumstoff, wobei die Düse eine runde Verteilungskammer besitzt, in welche der Mischer mündet und welche mit einer Anzahl Düsenaustritte verbunden ist, die nach verschiedenen Seiten gerichtet sind, um das aus der Düse heraustretende Reaktionsgemisch in einem vorausbestimmten Muster zu verteilen, und wobei die Verteilungskammer und die verschiedenen Düsenaustritte durch Düsenaustrittskanäle miteinander verbunden sind, die vom Randbereich der runden Verteilungskammer ausgehen.

Als Nachteil hat es sich bei den aus dem Stand der Technik bekannten Düseneinheiten jedoch herausgestellt, dass, um unterschiedliche Sprühstrahlen umzusetzen, entweder die Düseneinheit auszutauschen ist oder die Düseneinheit relativ kompliziert anzusteuern ist. Bei zwei parallel eingesetzten Mischköpfen, die jeweils eine eigene Austragsdüse aufweisen, benötigt man jedoch zusätzliche Umschalteinheiten zum Fördern des Reaktivgemisches sowie dessen Kunststoffkomponenten zu den einzelnen Mischköpfen.

Es ist daher Aufgabe der vorliegenden Erfindung, die aus dem Stand der Technik bekannten Nachteile zu beheben und insbesondere den Einsatz mehrerer verschiedener Düsen zum Herstellen eines Kunststoffteiles mit einer möglichst geringen Ansteuerungskomplexität zu erzielen.

Dies wird erfindungsgemäß mit einer Düseneinheit für eine Reaktionsgiessmaschine gemäss dem Anspruch 1 dadurch gelöst, dass eine, in einem zweiten Betriebszustand mit dem Eintrittskanal verbundene und wiederum zum Auftragen eines Reaktivgemisches vorbereitete, zweite Austragsdüse vorhanden ist. Somit sind die beiden Austragsdüsen (erste Austragsdüse und zweite Austragsdüse) separat wahlweise mit dem Eintrittskanal verbindbar. Somit ist entweder nur die erste Austragsdüse (erster Betriebszustand) oder nur die zweite Austragsdüse (zweiter Betriebszustand) mit dem Eintrittskanal verbunden, wobei eine Ventileinrichtung vorhanden ist, die dazu ausgebildet ist, zwischen dem ersten und dem zweiten Betriebszustand umzuschalten.

Dadurch wird eine Düseneinheit in Form eines Düsenwechselbausteins umgesetzt, wobei deren Austragsdüsen im Betrieb mit ein und demselben Mischkopf in Verbindung stehen. Somit wird insbesondere die notwendige Umschaltung zur Umleitung der einzelnen Kunststoffkomponenten des Reaktivgemisches deutlich vereinfacht.

Weitere vorteilhafte Ausführungsformen sind in den Unteransprüchen beansprucht und nachfolgend näher erläutert.

Die erste Austragsdüse unterscheidet sich in einem Düsenöffnungsquerschnitt von der zweiten Austragsdüse. In diesem Zusammenhang ist es besonders bevorzugt, wenn sich die beiden Austragsdüsen in einer Größe / Dimension und/oder einer Form des Düsenöffnungsquerschnittes voneinander unterscheiden. Dadurch sind die Austragsdüsen besonders individuell auf die einzelnen Einsatzbereiche anpassbar.

Weiterhin ist es dabei von Vorteil, wenn die erste Austragsdüse als eine Rundstrahldüse (bevorzugt mit rundem, besonders bevorzugt kreisrundem, oder quadratischem Düsenöffnungsquerschnitt) ausgebildet ist und/oder die zweite Austragsdüse als eine Flachstrahldüse (bevorzugt mit elliptischem oder rechteckigem Düsenöffnungsquerschnitt) ausgebildet ist.

In diesem Zusammenhang sei insbesondere darauf hingewiesen, dass die jeweilige Austragsdüse stets zum Austragen des Reaktivgemisches / Reaktionsgemisches, das zumindest aus zwei Kunststoffkomponenten besteht, in flüssiger Form ausgebildet ist. Das Reaktivgemisch ist bevorzugt ein Polyurethan-Werkstoff, nämlich ein noch fließfähiger / flüssiger Polyurethan-Schaum /-Hartschaum. Demzufolge sind die Austragsdüsen konstruktiv zum Austragen eines Polyurethan-Reaktivgemisches vorbereitet.

Um die Umschaltung zwischen den beiden Austragsdüsen geschickt zu steuern, ist eine Ventileinrichtung (in der Düseneinheit) vorhanden, die dazu ausgebildet ist, zwischen dem ersten Betriebszustand und dem zweiten Betriebszustand umzuschalten. Somit kann geschickt mittels einer Oder-Schaltung die jeweilige Austragsdüse einzeln angesteuert werden.

Des Weiteren ist es vorteilhaft, wenn die Ventileinrichtung hydraulisch aktuiert / angesteuert ist. Es ist jedoch auch prinzipiell möglich, die Ventileinrichtung pneumatisch oder elektrisch anzusteuern. Auch eine Kombination aus einer hydraulischen, pneumatischen sowie einer elektrischen Aktuierung ist weiter bevorzugt.

Hinsichtlich der Ventileinrichtung ist es zudem von Vorteil, wenn diese einen zwei (voneinander getrennte) Verbindungskanäle aufweisenden Kolben aufweist, wobei der Kolben so ausgestaltet ist, dass er in einer ersten Ventilstellung den Eintrittskanal über seinen ersten Verbindungskanal (unter Umsetzen des ersten Betriebszustandes) mit der ersten Austragsdüse verbindet und in einer zweiten Ventilstellung den Eintrittskanal über seinen zweiten Verbindungskanal (unter Umsetzen des zweiten Betriebszustandes) mit der zweiten Austragsdüse verbindet. Dadurch ist eine besonders kompakte Ventileinrichtung umgesetzt.

Weiter bevorzugt ist es, wenn jeder Verbindungskanal als eine (einzige) Bohrung ausgebildet ist. Dadurch wird der Herstellaufwand des Kolbens weiter herabgesenkt.

Der Kolben ist bevorzugt als Schiebekolben oder als Drehkolben ausgebildet.

Ist der Kolben als Schiebekolben (d.h. in einer axialen Richtung verschiebbar) ausgebildet, ist es vorteilhaft, wenn er mit einem die Verbindungskanäle aufweisenden ersten Längsbereich in einem Gehäuse der Düseneinheit verschiebbar geführt ist. Der Schiebekolben ist besonders präzise in seiner Längsrichtung zwischen den einzelnen Ventilstellungen hin und her verschiebbar.

In diesem Zusammenhang ist es weiterhin zweckmäßig, wenn der Schiebekolben in einem zweiten Längsbereich einen verbreiterten Kopf aufweist, an dem im Betrieb eine die Ventilstellungen erzwingende Verstellkraft anliegt / anlegbar ist.

Von Vorteil ist es auch, wenn der Kolben (vorzugsweise axial) zwischen den beiden Verbindungskanälen eine ein Dichtungsmaterial aufnehmende oder zur Aufnahme des Dichtungsmaterials ausgebildete erste Aussparung, die vorzugsweise als eine Ringnut ausgebildet ist, aufweist. Dadurch ist die Abdichtung der beiden Verbindungskanäle relativ zueinander sichergestellt.

In diesem Zusammenhang ist es zudem vorteilhaft, wenn der Kolben zu einer dem zweiten Verbindungskanal abgewandten (vorzugsweise axialen) Seite des ersten Verbindungskanals hin eine ein Dichtungsmaterial aufnehmende oder zur Aufnahme des Dichtungsmaterials ausgebildete zweite Aussparung, die wiederum bevorzugt als eine Ringnut ausgebildet ist, aufweist und/oder zu einer dem ersten Verbindungskanal abgewandten (vorzugsweise axialen) Seite des zweiten Verbindungskanals hin eine ein Dichtungsmaterial aufnehmende oder zur Aufnahme des Dichtungsmaterials ausgebildete dritte Aussparung, die wiederum bevorzugt als eine Ringnut ausgeführt ist, aufweist. Dadurch ist auch die Abdichtung der Verbindungskanäle zur Umgebung hin sichergestellt.

Das Dichtungsmaterial ist bereits bei der Montage der Düseneinheit als eine Dichtung, vorzugsweise als ein Dichtungsring, vormontiert. Alternativ oder zusätzlich hierzu bildet ein im Betrieb der Düseneinheit in die jeweilige Aussparung eindringender Teil des Reaktivgemisches das Dichtungsmaterial (mit) aus. In diesen Fällen sind die Verbindungskanäle stets verlässlich zur Umgebung hin sowie relativ zueinander abgedichtet.

Auch betrifft die Erfindung eine Mischkopfvorrichtung für eine Reaktionsgießmaschine, mit einem eine Mischkammer und einen mit dieser Mischkammer verbundenen oder verbindbaren Mischkopfauslass aufweisenden Mischkopf sowie der an dem Mischkopf wiederabnehmbar angebrachten erfindungsgemäßen Düseneinheit nach zumindest einer der zuvor beschriebenen Ausführungen, wobei der Eintrittskanal an dem Mischkopfauslass angeschlossen ist.

Zudem betrifft die Erfindung eine Reaktionsgießmaschine mit dieser Mischkopfvorrichtung.

Weiterhin betrifft die Erfindung ein Verfahren gemäss Anspruch 9 zum Herstellen eines Kunststoffteiles, wobei ein Reaktivgemisch unter Verwendung der Mischkopfvorrichtung oder der Reaktionsgießmaschine nach den zuvor beschriebenen Ausführungen auf eine eine Geometrie des Kunststoffteiles vorgebende Form (Gussform) oder auf einen das Kunststoffteil bereits teilweise ausbildenden Rohling, der bspw. als ein formstabiler Rohling oder als eine Folie ausgebildet ist, aufgetragen wird. Dadurch lässt sich das Kunststoffteil als fertiges Kunststoffbauteil oder als Halbzeug besonders effizient herstellen.

In anderen Worten ausgedrückt, wird somit in einem Mischkopf nur ein Düsenwechselbaustein (eine Düseneinheit) verwendet. Dieser Baustein schaltet zwischen Flachstrahl- und Rundstrahldüse um. Die aus dem Stand der Technik bisher bekannten Umschalteinheiten werden somit nicht mehr benötigt. Somit sind erfindungsgemäß ein Verfahren sowie eine Vorrichtung zur Herstellung von Kunststoffteilen, unter Verwendung eines Mischkopfes samt Düsenwechselbaustein, umgesetzt.

Die Erfindung wird nun nachfolgend anhand einer Figur näher erläutert, in welchem Zusammenhang ein bevorzugtes Ausführungsbeispiel erläutert ist.

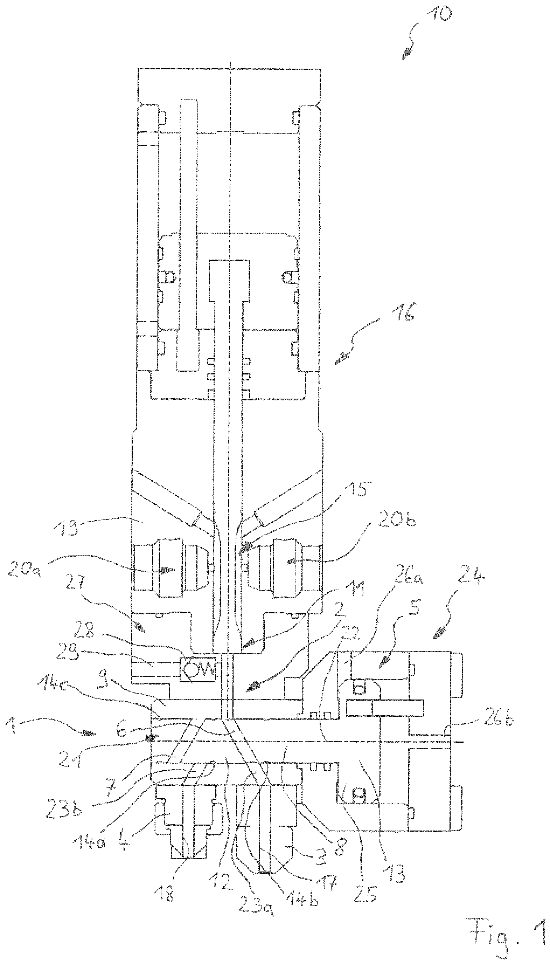

Es zeigt die einzige Fig. 1 eine Schnittdarstellung einer erfindungsgemäßen Düseneinheit, angebracht an einem Mischkopf einer Reaktionsgießmaschine, wobei der Schnitt derart verläuft, dass insbesondere ein Eintrittskanal, die durch zwei Austragsdüsen gebildeten Austrittskanäle sowie die die Austrittskanäle mit dem Eintrittskanal in einer jeweiligen Ventilstellung einer Ventileinrichtung verbindenden Verbindungskanäle der Düseneinheit erkennbar sind.

Die Figur ist lediglich schematischer Natur und dient ausschließlich dem Verständnis der Erfindung. Die gleichen Elemente sind mit denselben Bezugszeichen versehen.

Die Fig. 1 veranschaulicht eine als Mischkopfvorrichtung 10 nachfolgend bezeichnete Einheit aus einem Mischkopf 16 sowie einer Düseneinheit 1. Die Mischkopfvorrichtung 10 ist in ihrem Betrieb in einer hier der Übersichtlichkeit halber nicht weiter dargestellten Reaktionsgießmaschine eingesetzt. Die Reaktionsgießmaschine ist auf typische Weise zum Herstellen und Austragen / Auftragen eines Reaktivgemisches / Reaktionsgemisches ausgebildet. Das Reaktivgemisch ist ein Kunststoffreaktivgemisch, das aus verschiedenen (zumindest zwei) reaktiven Kunststoffkomponenten zusammengesetzt ist. Die zumindest zwei Kunststoffkomponenten, die vorzugsweise durch die Reaktionsgießmaschine zum Ausbilden des Reaktivgemisches verarbeitet sowie gefördert werden, sind zur Herstellung eines Polyurethan-Gemisches (Polyurethan-Schaumes / Polyurethan-Hartschaumes) geeignete Kunststoffkomponenten. Eine erste Kunststoffkomponente ist bevorzugt ein Dialkohol / Diol beziehungsweise ein Polyol, und eine zweite Kunststoffkomponente ist bevorzugt ein Polyisocyanat. Die Reaktionsgießmaschine bzw. die Mischkopfvorrichtung 10 wird zum Herstellen eines fertigen Kunststoffteils / Kunststoffbauteils oder zum Beschichten eines zur Ausbildung eines Kunststoffteils vorgesehenen Rohlings, wie einer Folie, (Halbzeug) eingesetzt.

Die beiden Kunststoffkomponenten werden im Betrieb auf typische Weise in dem Mischkopf 16 zu dem Reaktivgemisch vermischt. Die beiden Kunststoffkomponenten werden in einer Mischkammer 15 des Mischkopfes 16 vermischt. Die Mischkammer 15 ist innerhalb des Mischkopfes 16, d.h. innerhalb eines Mischkopfgehäuses 19, ausgebildet. Zwei Seitenkanäle 20a und 20b, die jeweils eine der Kunststoffkomponenten im Betrieb führen, münden seitlich in die zentrale Mischkammer 15 ein. Somit werden die Kunststoffkomponenten im Betrieb der Mischkammer 15 über die Seitenkanäle 20a und 20b zugeführt. An die Mischkammer 15 schließt ein aus dem Mischkopfgehäuse 19 austretender Mischkopfauslass 11 an. Im Betrieb wird im Anschluss an die Mischkammer 15 das vorliegende Reaktivgemisch hin zu dem Mischkopfauslass 11 befördert. Der Mischkopfauslass 11 ist als eine Auslassbohrung ausgestaltet.

Die modulare Düseneinheit 1 ist mittels einer hier der Übersichtlichkeit halber nicht weiter dargestellten Schraubenverbindung an dem Mischkopfgehäuse 19 wieder abnehmbar angebracht. Die Düseneinheit 1 ist an dem Mischkopfauslass 11 angeschlossen. Insbesondere weist die Düseneinheit 1 einen Eintrittskanal 2 auf, der mit dem Mischkopfauslass 11 verbunden ist / an diesem angeschlossen ist.

Der Eintrittskanal 2 der Düseneinheit 1 ist wiederum in einem Gehäuse 9 der Düseneinheit 1 eingebracht und als Bohrung umgesetzt. Der Eintrittskanal 2 durchdringt das Gehäuse 9 von einer Außenseite zu einer Innenseite des Gehäuses 9 hin. Somit verbindet der Eintrittskanal 2 den Mischkopfauslass 11 im Betrieb mit einer Innenseite des Gehäuses 9. An der Innenseite des Gehäuses 9 ist ein Kolbenaufnahmeraum 21 ausgebildet. In dem Kolbenaufnahmeraum 21 ist ein Kolben in Form eines Schiebekolbens 8 einer Ventileinrichtung 5 bewegbar / verschiebbar aufgenommen. Der Kolbenaufnahmeraum 21 ist somit durch das Gehäuse 9 umschlossen und im Wesentlichen zylindrisch ausgeformt. Der Schiebekolben 8 weist einen ersten Längsbereich 12 auf, der über seine Länge hinweg einen im Wesentlichen gleichbleibenden Außendurchmesser aufweist und daher im Wesentlichen zylindrisch ausgestaltet ist. Der Schiebekolben 8 ist (mit dem ersten Längsbereich 12) über eine Schiebeführung in dem Kolbenaufnahmeraum 21 verschiebbar geführt. Die Abmessungen des Schiebekolbens 8 und des Kolbenaufnahmeraums 21 sind so aufeinander abgestimmt, dass zwischen dem Schiebekolben 8 und dem Kolbenaufnahmeraum 21 ein möglichst enger Spalt vorhanden ist, um eine möglichst präzise Führung des Schiebekolbens 8 umzusetzen.

Zwei Verbindungskanäle 6, 7 verlaufen quer zu einer Längsachse 22 des Schiebekolbens 8 und durchdringen den Schiebekolben 8 quer zu der Längsachse 22. Die beiden Verbindungskanäle 6 und 7 sind in axialer Richtung der Längsachse 22 / des Schiebekolbens 8 zueinander beabstandet angeordnet. Die beiden Verbindungskanäle 6, 7 sind insbesondere relativ zu einer Bezugsebene, zu der die Längsachse 22 als Normale ausgestaltet ist, mit einem gleichen Winkelbetrag, aufeinanderzu gerichtet, angestellt. Die Verbindungskanäle 6 und 7 sind im Wesentlichen gleich ausgestaltet. Beide Verbindungskanäle 6 und 7 sind jeweils als eine den Schiebekolben 8 in Querrichtung durchdringende Bohrung / Durchgangsbohrung umgesetzt.

Abgestimmt auf die Verbindungskanäle 6 und 7 sind in dem Gehäuse 9 weiterhin zwei an jeweils eine Austragsdüse 3, 4 angeschlossene (Verbindungs-)Passagen 23a und 23b enthalten. Auch die Passagen 23a und 23b sind getrennt voneinander ausgebildet und in axialer Richtung der Längsachse 22 zueinander beabstandet. Jede Passage 23a und 23b durchdringt, wie auch bereits der Eintrittskanal 2, das Gehäuse 9 in einer radialen Richtung in Bezug auf die Längsachse 22. Die jeweilige Passage 23a und 23b ist in Abhängigkeit einer Verschiebestellung des Schiebekolbens 8 mit einem der Verbindungskanäle 6, 7 sowie über diesen Verbindungskanal 6, 7 mit dem Eintrittskanal 2 verbunden. Auf der Außenseite des Gehäuses 9 ist im Bereich der austretenden Passagen 23a und 23b jeweils eine Austragsdüse 3, 4 angebracht. Eine erste Austragsdüse 3 ist (mit einem durch sie ausgebildeten ersten Austrittskanal 17) so angeordnet, dass sie (/ der erste Austrittskanal 17) an die erste Passage 23a angeschlossen ist. Eine zweite Austragsdüse 4 ist benachbart zu der ersten Austragsdüse 3 so (mit einem durch sie ausgebildeten zweiten Austrittskanal 18) angeordnet, dass sie (/ der zweite Austrittskanal 18) an die zweite Passage 23b angeschlossen ist.

Der Schiebekolben 8 ist mit seinen Verbindungskanälen 6, 7 derart auf den Eintrittskanal 2 sowie auf die Passagen 23a und 23b abgestimmt, dass er in einer ersten Ventilstellung (wie in Fig. 1 dargestellt) in einem ersten Betriebszustand mit seinem ersten Verbindungskanal 6 den Eintrittskanal 2 mit der ersten Passage 23a und somit wiederum mit der ersten Austragsdüse 3 verbindet und in einer (relativ zu der ersten Ventilstellung axial versetzten) zweiten Ventilstellung in einem zweiten Betriebszustand den Eintrittskanal 2 über seinen zweiten Verbindungskanal 7 mit der zweiten Passage 23b und somit wiederum mit der zweiten Austragsdüse 4 verbindet.

Somit ist erfindungsgemäß durch die Düseneinheit 1 eine Wechseleinheit umgesetzt, die wahlweise eine erste Austragsdüse 3 (in der ersten Ventilstellung) oder eine zweite Austragsdüse 4 (in der zweiten Ventilstellung) mit dem Eintrittskanal 2 verbindet. Zum Umschalten der Düseneinheit 1 ist die als Wechselventil wirkende / ausgebildete Ventileinrichtung 5 vorgesehen. Die Düseneinheit 1 ist somit als Düsenwechselbaustein umgesetzt.

Die erste Austragsdüse 3 ist mit einem anderen Düsenöffnungsquerschnitt als die zweite Austragsdüse 4 ausgebildet. Insbesondere ist die erste Austragsdüse 3 als eine Rundstrahldüse ausgebildet und die zweite Austragsdüse 4 als eine Flachstrahldüse ausgebildet. Somit unterscheiden sich die beiden Austragsdüsen in ihrer Form des Düsenöffnungsquerschnittes.

Des Weiteren ist aus Fig. 1 ersichtlich, dass die Ventileinrichtung 5 prinzipiell hydraulisch aktuiert ist. Hierfür ist in einem, versetzt zu dem ersten Längsbereich 12 ausgebildeten, zweiten Längsbereich 13 des Schiebekolbens 8 eine Betätigungseinrichtung 24 angeschlossen / ausgebildet. Der Schiebekolben 8 weist in dem, außerhalb des Kolbenaufnahmeraums 21 angeordneten, zweiten Längsbereich 13 einen gegenüber dem ersten Längsbereich 12 verbreiterten Kopf 25 auf. Mit dem Kopf 25 wirken zwei Hydraulikanschlüsse 26a und 26b zusammen, über die jeweils eine in axialer Richtung auf den Kopf 25 wirkende Verstellkraft erzeugt werden kann. Somit ist in Abhängigkeit der Druckdifferenz der beiden Hydraulikanschlüsse 26a und 26b entweder eine dem Längsbereich 12 zugewandte oder eine dem Längsbereich 12 abgewandte Seite des Kopfes 25 mit einem Überdruck beaufschlagt, sodass der Schiebekolben 8 in die jeweilige Ventilstellung gezwungen wird.

Des Weiteren ist in Fig. 1 zu erkennen, dass zwischen den beiden Verbindungskanälen 6 und 7 sowie zu deren einander abgewandten axialen Seiten jeweils eine Aussparung 14a bis 14c angebracht ist, die zum Abdichten der Verbindungskanäle 6 und 7 zueinander sowie zur Umgebung hin dienen. Die jeweiligen Aussparungen 14a bis 14c sind als Ringnuten gleich ausgestaltet. In jeder Aussparung 14a bis 14c ist im Betrieb ein Dichtungsmaterial eingebracht. Das Dichtungsmaterial kann prinzipiell bereits zur Vormontage der Düseneinheit 1 in dem Schiebekolben 8 eingebracht sein. Zusätzlich oder alternativ kann jede Aussparung 14a bis 14c auch nach der ersten Inbetriebnahme der Düseneinheit 1 durch das Reaktivgemisch befüllt werden. Das dann in der Aussparung 14a, 14b, 14c eintretende Reaktivgemisch härtet aus und quillt derart auf, dass es ebenfalls unmittelbar als Dichtmaterial dient. Die Verbindungskanäle 6 und 7 sind daher auf effektive Weise abgedichtet. Eine erste Aussparung 14a ist axial zwischen den Verbindungskanälen 6 und 7 angeordnet und dichtet die Verbindungskanäle 6 und 7 voneinander ab. Eine zweite Aussparung 14b ist zu einer dem zweiten Verbindungskanal 7 abgewandten axialen Seite des ersten Verbindungskanals 6 hin angeordnet. Eine dritte Aussparung 14c ist zu einer dem ersten Verbindungskanal 6 abgewandten axialen Seite des zweiten Verbindungskanals 7 hin angeordnet. Somit dichten die in den beiden zweiten und dritten Aussparungen 14b, 14c eingebrachten Dichtmaterialien die Verbindungskanäle 6 und 7 zur Umgebung hin ab.

Des Weiteren ist in Fig. 1 eine schematisch abgebildete Reinigungseinrichtung 27 zu erkennen. Die Reinigungseinrichtung 27 ist Bestandteil der Düseneinheit 1. Die Reinigungseinrichtung 27 weist eine Querbohrung 29 sowie ein in diese Querbohrung 29 eingesetztes Rückschlagventil 28 auf. Die Querbohrung 29 verläuft quer zu dem Einlasskanal 2 und mündet in diesen ein. Nach vorherigem Befördern des Reaktivgemisches durch die jeweilige Austrittsdüse 3, 4 und somit nach erfolgtem Herstellen eines Kunststoffteils bzw. nach erfolgtem Beschichten eines zur Ausbildung eines Kunststoffteils vorgesehenen Rohlings mittels des Reaktionsgemisches, wird auf typische Weise in diese Querbohrung 29 Luft oder eine Reinigungsflüssigkeit eingebracht, sodass die Kanäle 2, 6 oder 2, 7 sowie die Passage 23a oder 23b samt der Austragsdüse 3 oder 4 gereinigt / frei gespült werden.

In anderen Worten ausgedrückt, ist somit erfindungsgemäß ein Mischkopf 16 vorhanden, bei dem ein automatischer Düsenwechsel zwischen einer Rundstrahl- sowie einer Flachstrahldüse 3, 4 erfolgt. Es wird somit vermieden, aufwändige Umschalteinheiten einzusetzen. In dem erfindungsgemäßen Düsenwechselbaustein 1 ist ein hydraulisch angetriebener Umschaltkolben (Schiebekolben 8) für die Umschaltung zwischen Rund- und Flachstrahlstrahldüse eingesetzt 3, 4. Der Umschaltkolben 8 hat zwei Bohrungen (Verbindungskanäle 6, 7); eine Bohrung (erster Verbindungskanal 6) für die Rundstrahldüse 3 und eine Bohrung (zweiter Verbindungskanal 7) für die Flachstrahldüse 4. Um den Umschaltkolben 8 nach außen hin abzudichten ist das Spiel zwischen Umschaltkolben 8 in dem Gehäuse 9 relativ klein. Außerdem hat der Umschaltkolben 8 drei kleine Nuten (Aussparungen 14a, 14b, 14c), die mit Dichtungsmaterial gefüllt sind.

### Bezugszeichenliste

- 1: Düseneinheit
- 2: Eintrittskanal
- 3: erste Austragsdüse
- 4: zweite Austragsdüse
- 5: Ventileinrichtung
- 6: erster Verbindungskanal
- 7: zweiter Verbindungskanal
- 8: Schiebekolben
- 9: Gehäuse
- 10: Mischkopfvorrichtung
- 11: Mischkopfauslass
- 12: erster Längsbereich
- 13: zweiter Längsbereich
- 14a: erste Aussparung
- 14b: zweite Aussparung
- 14c: dritte Aussparung
- 15: Mischkammer
- 16: Mischkopf
- 17: erster Austrittskanal
- 18: zweiter Austrittskanal
- 19: Mischkopfgehäuse
- 20a: erster Seitenkanal
- 20b: zweiter Seitenkanal
- 21: Kolbenaufnahmeraum
- 22: Längsachse
- 23a: erste Passage
- 23b: zweite Passage
- 24: Betätigungseinrichtung
- 25: Kopf
- 26a: erster Hydraulikanschluss
- 26b: zweiter Hydraulikanschluss
- 27: Reinigungseinrichtung
- 28: Rückschlagventil
- 29: Querbohrung

## Patentansprüche

1. Düseneinheit (1) für eine Reaktionsgießmaschine, mit einem zum Anschluss an einen Mischkopfauslass (11) vorbereiteten Eintrittskanal (2) sowie einer, zum Auftragen eines Reaktivgemisches vorbereiteten, in einem ersten Betriebszustand mit dem Eintrittskanal (2) verbundenen, ersten Austragsdüse (3), **dadurch gekennzeichnet, dass** eine, in einem zweiten Betriebszustand mit dem Eintrittskanal (2) verbundene und wiederum zum Auftragen eines Reaktivgemisches vorbereitete, in einem Düsenöffnungsquerschnitt von der ersten Austragsdüse (3) sich unterscheidende zweite Austragsdüse (4) vorhanden ist, sodass die erste Austragsdüse (3) und die zweite Austragsdüse (4) separat wahlweise mit dem Eintrittskanal (2) verbindbar sind, wobei die erste Austragsdüse (3) ausgebildet ist, im ersten Betriebszustand mit dem Eintrittskanal (2) verbunden zu sein, und die zweite Austragsdüse (4) ausgebildet ist, im zweiten Betriebszustand mit dem Eintrittskanal (2) verbunden zu sein, wobei eine Ventileinrichtung (5) vorhanden ist, die dazu ausgebildet ist, zwischen dem ersten Betriebszustand und dem zweiten Betriebszustand umzuschalten.

2. Düseneinheit (1) nach Anspruch 1, **dadurch gekennzeichnet, dass** die erste Austragsdüse (3) als eine Rundstrahldüse ausgebildet ist und/oder die zweite Austragsdüse (4) als eine Flachstrahldüse ausgebildet ist.

3. Düseneinheit (1) nach einem der vorangegangenen Ansprüche, **dadurch gekennzeichnet, dass** die Ventileinrichtung (5) einen zwei Verbindungskanäle (6, 7) aufweisenden Kolben (8) aufweist, wobei der Kolben (8) so ausgestaltet ist, dass er in einer ersten Ventilstellung den Eintrittskanal (2) über seinen ersten Verbindungskanal (6) mit der ersten Austragsdüse (3) verbindet und in einer zweiten Ventilstellung den Eintrittskanal (2) über seinen zweiten Verbindungskanal (7) mit der zweiten Austragsdüse (4) verbindet.

4. Düseneinheit (1) nach Anspruch 3, **dadurch gekennzeichnet, dass** der Kolben (8) als Schiebekolben ausgebildet ist und mit einem die Verbindungskanäle (6, 7) aufweisenden ersten Längsbereich (12) in einem Gehäuse (9) der Düseneinheit (1) verschiebbar geführt ist.

5. Düseneinheit (1) nach Anspruch 3 oder 4, **dadurch gekennzeichnet, dass** der Kolben (8) zwischen den beiden Verbindungskanälen (6, 7) eine ein Dichtungsmaterial aufnehmende oder zur Aufnahme des Dichtungsmaterials ausgebildete erste Aussparung (14a) aufweist.

6. Düseneinheit (1) nach einem der Ansprüche 3 bis 5, **dadurch gekennzeichnet, dass** der Kolben (8) zu einer dem zweiten Verbindungskanal (7) abgewandten Seite des ersten Verbindungskanals (6) hin eine ein Dichtungsmaterial aufnehmende oder zur Aufnahme des Dichtungsmaterials ausgebildete zweite Aussparung (14b) aufweist und/oder zu einer dem ersten Verbindungskanal (6) abgewandten Seite des zweiten Verbindungskanals (7) hin eine ein Dichtungsmaterial aufnehmende oder zur Aufnahme des Dichtungsmaterials ausgebildete dritte Aussparung (14c) aufweist.

7. Mischkopfvorrichtung (10) für eine Reaktionsgießmaschine, mit einem eine Mischkammer (15) und einen mit dieser Mischkammer (15) verbundenen oder verbindbaren Mischkopfauslass (11) aufweisenden Mischkopf (16) sowie einer an dem Mischkopf (16) wiederabnehmbar angebrachten Düseneinheit (1) nach einem der Ansprüche 1 bis 6, wobei der Eintrittskanal (2) an dem Mischkopfauslass (11) angeschlossen ist.

8. Reaktionsgießmaschine mit einer Mischkopfvorrichtung (10) nach Anspruch 7.

9. Verfahren zum Herstellen eines Kunststoffteiles, wobei ein Reaktivgemisch unter Verwendung der Reaktionsgießmaschine nach Anspruch 8 auf eine eine Geometrie des Kunststoffteiles vorgebende Negativform oder auf einen das Kunststoffteil bereits teilweise ausbildenden Rohling aufgetragen wird.

## Claims

1. A nozzle unit (1) for a reaction moulding machine, comprising an inlet channel (2) prepared for connection to a mixing head outlet (11) and comprising a first dispensing nozzle (3), which is prepared for applying a reactive mixture and which is connected to the inlet channel (2) in a first operating state, **characterized in that** a second dispensing nozzle (4) is present, which is connected to the inlet channel (2) in a second operating state and which is likewise prepared for applying a reactive mixture, in a nozzle opening cross-section differing from the first dispensing nozzle (3), so that the first dispensing nozzle (3) and the second dispensing nozzle (4) are able to be connected separately optionally to the inlet channel (2), wherein the first dispensing nozzle (3) is configured, in the first operating state, to be connected to the inlet channel (2), and the second dispensing nozzle (4) is configured, in the second operating state, to be connected to the inlet channel (2), wherein a valve arrangement (5) is present, which is configured to switch between the first operating state and the second operating state.

2. The nozzle unit (1) according to Claim 1, **characterized in that** the first dispensing nozzle (3) is configured as a round jet nozzle and/or the second dispensing nozzle (4) is configured as a flat jet nozzle.

3. The nozzle unit (1) according to one of the preceding claims, **characterized in that** the valve arrangement (5) has a piston (8) having two connecting channels (6, 7), wherein the piston (8) is configured so that in a first valve position it connects the inlet channel (2) via its first connecting channel (6) with the first dispensing nozzle (3), and in a second valve position it connects the inlet channel (2) via its second connecting channel (7) with the second dispensing nozzle (4).

4. The nozzle unit (1) according to Claim 3, **characterized in that** the piston (8) is configured as a sliding piston and with a first longitudinal region (12), having the connecting channels (6, 7), is guided displaceably in a housing (9) of the nozzle unit (1).

5. The nozzle unit (1) according to Claim 3 or 4, **characterized in that** the piston (8) has, between the two connecting channels (6, 7), a first recess (14a) receiving a sealing material or configured to receive the sealing material.

6. The nozzle unit (1) according to one of Claims 3 to 5, **characterized in that** the piston (8) has towards a side of the first connecting channel (6) facing away from the second connecting channel (7), a second recess (14b) receiving a sealing material or configured to receive the sealing material and/or has, towards a side of the second connecting channel (7) facing away from the first connecting channel (6), a third recess (14c) receiving a sealing material or configured to receive the sealing material.

7. A mixing head device (10) for a reaction moulding machine, with a mixing head (16) having a mixing chamber (15) and a mixing head outlet (11) connected or connectable with this mixing chamber (15), and a nozzle unit (1) arranged on the mixing head (16) so as to be removable again, according to one of Claims 1 to 6, wherein the inlet channel (2) is connected to the mixing head outlet (11).

8. A reaction moulding machine with a mixing head device (10) according to Claim 7.

9. A method for producing a plastic part, wherein a reactive mixture, with the use of the reaction moulding machine according to Claim 8, is applied onto a negative mould providing a geometry of the plastic part, or onto a blank already partially forming the plastic part.

## Revendications

1. Unité formant buse (1) pour une machine de moulage par réaction, comprenant un canal d'entrée (2) préparé pour le raccordement à une sortie de tête de mélange (11) ainsi qu'une première buse d'application (3) reliée au canal d'entrée (2) dans un premier état de fonctionnement, préparée pour appliquer un mélange de réactif, **caractérisée en ce qu'**une seconde buse d'application (4) se distinguant de la première buse d'application (3) est présente, reliée au canal d'entrée (2) dans un second état de fonctionnement et à son tour préparée pour l'application d'un mélange de réactif, de sorte que la première buse d'application (3) et la seconde buse d'application (4) peuvent être reliées au canal d'entrée (2) séparément au choix, dans laquelle la première buse d'application (3) est conçue pour être reliée au canal d'entrée (2) dans le premier état de fonctionnement, et la seconde buse d'application (4) est conçue pour être reliée au canal d'entrée (2) dans le second état de fonctionnement, dans laquelle un dispositif de soupape (5) est présent qui est conçu pour commuter entre le premier état de fonctionnement et le second état de fonctionnement.

2. Unité formant buse (1) selon la revendication 1, **caractérisée en ce que** la première buse d'application (3) est conçue en tant qu'une buse à jet rond et/ou la seconde buse d'application (4) est conçue en tant qu'une buse à jet plat.

3. Unité formant buse (1) selon l'une des revendications précédentes, **caractérisée en ce que** le dispositif de soupape (5) présente un piston (8) présentant deux canaux de liaison (6, 7), dans lequel le piston (8) est ainsi conçu que dans une première position de soupape, il relie le canal d'entrée (2) à la première buse d'application (3) par le biais de son premier canal de liaison (6) et, dans une seconde position de soupape, relie le canal d'entrée (2) à la seconde buse d'application (4) par le biais de son second canal de liaison (7).

4. Unité formant buse (1) selon la revendication 3, **caractérisée en ce que** le piston (8) est conçu en tant que piston-poussoir et est dirigé en pouvant être poussé dans un logement (9) de l'unité formant buse (1) avec une première partie longitudinale (12) présentant les canaux de liaison (6, 7).

5. Unité formant buse (1) selon la revendication 3 ou 4, **caractérisée en ce que** le piston (8) présente entre les deux canaux de liaison (6, 7), un premier évidement (14a) recevant un matériau d'étanchéité ou formé pour recevoir le matériau d'étanchéité.

6. Unité formant buse (1) selon l'une des revendications 3 à 5, **caractérisée en ce que** le piston (8) présente en direction d'un côté du premier canal de liaison (6) détourné du second canal de liaison (7), un deuxième évidement (14b) recevant un matériau d'étanchéité ou formé pour recevoir le matériau d'étanchéité et/ou en direction d'un côté du second canal de liaison (7) détourné du premier canal de liaison (6), un troisième évidement (14c) recevant un matériau d'étanchéité ou formé pour recevoir le matériau d'étanchéité.

7. Dispositif de tête de mélange (10) pour une machine de moulage par réaction, comprenant une tête de mélange (16) avec une chambre de mélange (15) et une sortie de tête de mélange (11) reliée ou pouvant être reliée à cette chambre de mélange (15) ainsi qu'une unité formant buse (1) placée de manière amovible sur la tête de mélange (16) selon l'une des revendications 1 à 6, dans lequel le canal d'entrée (2) est raccordé à la sortie de tête de mélange (11).

8. Machine de moulage par réaction comprenant un dispositif de tête de mélange (10) selon la revendication 7.

9. Procédé destiné à la fabrication d'une pièce en matière plastique, dans lequel un mélange de réactif est appliqué en utilisant la machine de moulage par réaction selon la revendication 8, sur une forme négative donnant au préalable une géométrie de la pièce de plastique ou un flanc formant déjà partiellement la pièce de plastique.
